# EUROPÄISCHE PATENTSCHRIFT

(11) **EP 2 646 799 B1**
(45) Veröffentlichungstag und Bekanntmachung des Hinweises auf die Patenterteilung: **24.08.2016**
(21) Anmeldenummer: 11793752.4
(22) Anmeldetag: 05.12.2011
(51) Int. Cl.: G01N 15/14, G01N 19/10, G01N 33/28

(54) **VERFAHREN UND VORRICHTUNG ZUR BESTIMMUNG DES WASSERGEHALTS VON NICHT WASSERBASIERTEN FLÜSSIGKEITEN**
METHOD AND DEVICE FOR DETERMINING THE WATER CONTENT OF NON-WATER-BASED LIQUIDS
PROCÉDÉ ET DISPOSITIF DE DÉTERMINATION DE LA TENEUR EN EAU DE LIQUIDES N'ÉTANT PAS À BASE D'EAU

(30) Priorität: 05.12.2010 DE 102010053237
(43) Veröffentlichungstag der Anmeldung: 09.10.2013
(73) Patentinhaber: Klotz, Markus, 75378 Bad Liebenzell (DE)
(72) Erfinder: Klotz, Markus, 75378 Bad Liebenzell (DE)
(74) Vertreter: DREISS Patentanwälte PartG mbB
(86) Internationale Anmeldenummer: PCT/EP2011/071765
(87) Internationale Veröffentlichungsnummer: WO 2012/076474

(56) Entgegenhaltungen:
- EP-A1- 1 798 553
- WO-A1-2008/077780
- WO-A1-2009/064868
- WO-A2-2008/003365
- US-A- 3 500 046
- US-A1- 2009 202 805
- US-B1- 7 354 768

## Beschreibung

Die Erfindung betrifft ein Verfahren und eine Vorrichtung zur Bestimmung des Wassergehalts von nicht wasserbasierten Flüssigkeiten.

Nicht wasserbasierte Flüssigkeiten, d. h. Flüssigkeiten außer Wasser, können dennoch Wasser enthalten, das auf verschiedene Weise in diese Flüssigkeiten gelangen kann, insbesondere durch eine hygroskopische, d. h. wasseranziehende Eigenschaft. Das ist z. B. bei Treibstoffen wie Kerosin, Diesel und Benzin, aber auch bei Bremsflüssigkeiten, Motor-, Getriebe-, Hydraulikölen usw. der Fall, um die wohl bekanntesten derartiger Flüssigkeiten zu nennen. Diese nehmen, insbesondere bei längerer Bevorratung in z. B. Tanks, Kanistern und sonstigen, insbesondere auch Kunststoff-Behältern, den in diesen aus der Luftfeuchtigkeit der Umgebungsluft kondensierten Wasserdampf zumindest als so genanntes freies, d. h. ungebundenes Wasser in Tröpfchenform auf.

Beim Verbrennen von Kerosin in Strahltriebwerken von Luftfahrzeugen kann in ihm enthaltenes Wasser beim Auftreffen auf deren Luftschaufeln einerseits zu gefährlichen Kavitationen andererseits aber auch zur Gefahr der Eisbildung in den Tanks der Luftfahrzeuge in größerer Flughöhe führen.

Wasser in Fahrzeugkraftstoffanlagen für Benzin und Diesel stellt ebenfalls eine große Gefahr für Schäden an den wichtigen Motor- und Kraftstoffanlagenkomponenten, wie z. B. Kraftstoff-Pumpen und -Filter und die Kraftstoffeinspritzventile der aktuellen Hochleistungs-Einspritzpumpensysteme usw. dar.

Abgesehen davon bildet das von Treibstoffvorräten absorbierte Wasser schnell einen Nährboden für sie zersetzende Bakterien oder Algen und eine sich daraus ergebenden gefährliche Schlammbildung, die eine zusätzliche Gefahr durch z. B. Verstopfungen der von diesen Flüssigkeiten durchströmten Transportleitungen, Filter, Pumpensysteme usw. darstellt.

Um solchen Gefahren und Schäden bei z. B. Luftfahrzeugen, wie z. B. Flugzeugen und Helikoptern, vorzubeugen, wird z. B. vor deren Inbetriebnahme nach Betriebspausen, aber auch bei einer normalen Betankung der Wassergehalt des in Vorratstanks bereitgehaltenen, aber auch direkt in Tankzügen antransportierten Kerosins bestimmt. Hierfür sind verschiedene Kontroll- und Messverfahren bekannt, um mit dem jeweiligen Messergebnis die verantwortungsvolle Entscheidung zu treffen, ob die jeweilige Flüssigkeit noch zum bestimmungsgemäßen Gebrauch verwendet werden kann oder nicht.

Ein besonders einfaches Kerosin-Kontrollverfahren beruht auf einer schlichten Inaugenscheinnahme einer Probe des zu tankenden Kerosins in einem Glas auf Trübungen durch Wasser mit dem menschlichen Auge.

Zur Untersuchung auf in Kerosin enthaltenem freien Wasser sind aus der US 2010086587A1 "Hartschalenkapselformulierungen" *(Hard shell cap-sule formulations)* bekannt, demzufolge als "Shell-Test" bekannt, bei dem Hartschalenkapseln mit einer normal hygroskopischen "Formulierung", d. h. Zubereitung bzw. Rezeptur gefüllt werden. Dabei handelt es sich um einen Trägerstoff bzw. ein Bindemittel *(excipient)* und eine aktive Masse *(active compound),* wie z. B. einem Protein oder Peptid, die ein Indikatormaterial bilden. Der Wassergehalt kann dann dadurch ermittelt werden, dass in einer zum Ziehen einer Kerosinprobe benutzten Plastikspritze das Kerosin über eine solche Kapsel geleitet wird, deren Füllung bei Kontakt mit freiem Wasser im Kerosin die Farbe ändert, wenn der Gehalt dieses Wassers größer als 30 ppm ist *('parts per million"= Teile von einer Million),* dem hier für Kerosin maximal zulässig erachteten Gehalt an freiem Wasser.

Ein weiteres Verfahren zum Bestimmen des Gehalts an freiem Wasser in Kohlenwasserstoffen ist aus der US 3500046A bekannt. Hier werden für die Kerosinuntersuchung chemisch mit Uran behandelte Pads verwendete, deren unter einer UV-Licht-quelle abgegebene Fluoreszenz, die proportional zum Gehalt an freien Wasser ist, gemessen werden kann.

In der WO 02/093147A1 ist ein Verfahren beschrieben, bei dem die Temperatur der zu untersuchenden Flüssigkeit geändert wird, um durch deren Reaktion daraufhin Rückschlüsse auf ihren Wassergehalt zu ziehen.

Aus der WO 03/054482A2 ist es bekannt, zur Ermittlung des Wassergehalts von Motoröl eine Platine mit zwei mäanderförmig angeordneten Schicht-Elektroden in das Motoröl einzutauchen, um damit an einer Stelle dessen Wasserverunreinigung zu ermitteln.

Aus der WO 2008/003365 A2 ist eine kapazitive Messvorrichtung mit zwei in einem Messkanal angeordneten plattenförmigen Elektroden zum Nachweis von Fremdstoffen, insbesondere Partikel von freiem Wasser in Kohlenwasserstoffen, bekannt.

Aus der EP 1798553A1 ist ein Messfühler zur Bestimmung des relativen Feuchtegehalts eines Öls bei einer Ausgestaltung einer Sensorvorrichtung als Kondensator ausgestaltet, der zwei Elektroden aufweist, die zwischen sich eine Feuchtigkeit absorbierende Schicht, insbesondere eine hygroskopische Polymerschicht aufnehmen. Durch die Anlagerung von Feuchtigkeit aus dem zu überwachenden Öl wird die Kapazität des Messfühlers verändert.

Es scheint somit schwierig zu sein, eine einfache Vorgehensweise zu finden, um zumindest freies Wasser in z. B. Kerosin nachzuweisen, zumal die Wasserpartikel an Oberflächen kleben, zu Boden sinken, sich mit anderen Partikeln verbinden und durch einen Temperaturwechsel sich bilden oder auflösen können. Angesichts des großen Bedarfs an einem möglichst einfach durchzuführenden Messverfahren wird weiter nach entsprechenden Verfahren gesucht.

Es ist somit Aufgabe der Erfindung, ein einfaches, von jedermann durchführbares Verfahren bereitzustellen, mit dem ohne spezielles Fachwissen und ohne großen Vorbereitungsaufwand, d. h. jederzeit bei Bedarf, zumindest der Gehalt an freiem Wasser in nicht wasserbasierten Flüssigkeiten auf einfache, wenige Schritte umfassende, sozusagen standardisierte, sehr zuverlässige Weise mit handelsüblichen, genormten Messgeräten festgestellt werden kann.

Die Erfindung gemäß dem Verfahrensanspruch 1 und dem Vorrichtungsanspruch 8 basiert auf der Idee, den Wassergehalt von anderen Flüssigkeiten als Wasser, insbesondere von hygroskopischen Flüssigkeiten, dadurch auf einfache Art festzustellbar zu machen, dass man durch Zugabe einer stark hygroskopischen Substanz in eine Probe der zu untersuchenden Flüssigkeit zumindest das in dieser enthaltene freie Wasser von der Substanz aufsaugen lässt, wobei sich ihr Volumen durch Aufquellen vergrößert. Kann dann diese Volumenvergrößerung gemessen werden, dann kann aus dem Messergebnis wiederum auf den aktuellen Wassergehalt der betreffenden Flüssigkeit geschlossen werden.

Eine solche hygroskopische Substanz stellen gegenwärtig die "Superabsorber" genannten superabsorbierenden Polymere (SAP - Superabsorbent Polymers) dar. Diese Kunststoffe sind in der Lage, durch schnelle Aufnahme von Wasser entsprechend schnell aufzuquellen und dabei ein Vielfaches ihres Eigengewichts an Wasser aufzunehmen und sogar unter Druck zu halten. Sie finden bereits in vielen Produkten Verwendung, bei denen es ebenfalls vorrangig um die Aufnahme und ggf. auch längerfristige Speicherung von Wasser, ggf. aber auch anderer Flüssigkeiten geht.

Diese SAPs sind z. B. als weißes, grobkörniges Pulver oder feines Granulat, d. h. in Partikelform im Handel verfügbar, und können, ohne besondere Vorkehrungen beim Umgang mit ihnen treffen zu müssen, einfach eingesetzt werden, sind also problemlos handhabbar.

Für den Einsatz zur Wassergehaltsbestimmung können diese Partikel aus einem Größenordnungsbereich von typischerweise 10 µm bis 100 µm ausgewählt werden, wobei sie auch in Kugelform im Handel verfügbar sind.

Zum Messen des Ausmaßes der durch Wasseraufnahme erfolgten Aufquellung und der so bewirkten Vergrößerung dieser SAP-Partikel, die hierfür statt in verschiedenen Größen auch in nur einer einzigen Größe, z. B. in der Größe 50 µm, verwendet werden können, können handelsübliche Messgeräte eingesetzt werden, wie z. B. laserbasierte optische Partikelmessgeräte, die mit dem Lichtabschattungsprinzip arbeiten. Ggf. aber auch Lichtbeugungsgeräte, bei denen, z. B. bei einer großen Anzahl

SAP-Partikel, d. h. einer hohen Partikelkonzentration, mittels einer so genannten Streulicht-Keule Partikelgesamtmengen-Messungen vorgenommen werden.

Bei Verwendung eines - kurz auch als "Partikelzähler" bezeichneten - Partikelmessgeräts wird die auf Wassergehalt zu untersuchende, sich zunächst in einem Probengefäß befindende Flüssigkeitsprobe ggf. zur Durchmischung mit dem ggf. zumindest darin enthaltenen freien Wasser, z. B. nach einer vorherigen längeren Verweildauer, z. B. in einem Vorratsbehälter, vorsorglich geschüttelt. Danach werden SAP-Partikel hinzugegeben, die wegen des in diesen Messgeräten angewandten Lichtabschattungsprinzips aus Messgenauigkeitsgründen vorzugsweise Kugelform haben.

Nach anschließendem erneuten, durch z. B. ebenfalls, wegen der stark hygroskopischen Eigenschaft der SAP-Partikel aber nur kurz, z. B. nur 30 Sekunden lang, vorzunehmenden, z. B. manuellen Schütteln des Probengefäßes zwecks Verteilung der hinzu gegebenen SAP-Partikel in der Probe und nach einer sich anschließenden, auch nur kurzen Reaktionszeit der SAP-Partikel mit zumindest dem in der Probenflüssigkeit enthaltenen freien Wasser, wird die Flüssigkeitsprobe in das Partikelmessgerät gegeben und darin durch einen in einer Messküvette ausgebildeten Messkanal geleitet.

Dabei wird ein diesen beleuchtender Laserlichtstrahl in Abhängigkeit von der - ggf. nur geringfügig variierenden - Größe der aufgequollenen SAP-Partikel entsprechend geschwächt. Diese Schwächung wird von einem Lichtschwächungs-Messsensor detektiert und in ein der jeweiligen Schwächung entsprechendes Größensignal, z. B. ein Strom- oder Spannungssignal, umgesetzt. Diese einzelnen Größensignale, wie auch ihre üblicherweise vom Partikelmessgerät ermittelte Anzahl, werden in einer softwarebasierten Auswerteeinheit ausgewertet und z. B. in einer Größenverteilungskurve in einem Koordinatenkreuz-Diagramm oder aber auch, für jedermann leicht verständlich, einfach als ein den Wassergehalt durch Normalisierung angebender Zahlenwert in, wie schon erwähnt, der Maßeinheit "ppm" an z. B. einem Display optisch sichtbar gemacht, ggf. auch ausgedruckt.

Das zuvor erwähnte Schütteln der Probe kann z. B. auch maschinell durch Rührgeräte, Rütteltische oder auch z. B. Flügelpumpen und dergleichen bekannte Vorrichtungen erfolgen.

Bei dem hier vorgestellten erfindungsgemäßen Verfahren zur Ermittlung des Gehalts an zumindest freiem Wasser wird also die Größe der einzelnen, durch Wasseraufnahme aufgequollenen und entsprechend vergrößerten Partikel durch ein physikalisches Messverfahren auf einfache Weise gemessen und üblicherweise auch ihre Anzahl gezählt.

Ein Beispiel für den Einsatz des erfindungsgemäßen Verfahrens:

Zur manuellen Bestimmung des Wassergehalts von z. B. Dieselkraftstoff wird, z. B. in einem Art Reagenzglas, zu einer kleinen, z. B. 100 ml betragenden Menge davon eine flüssigkeitsmengenabhängig konstante, hier z. B. 30 mg betragende Menge vorzugsweise kugelförmiger SAP-Partikel vorzugsweise in einer einheitlichen Größe von 50 µm in einer engen Größenverteilung von z. B. 50 µm +/- 10%, manuell, z. B. mit einem Löffel aus einem luftdicht schließenden Vorratsglas, zugegeben.

Durch die vorzugsweise zu wählende Größe 50 µm wird sichergestellt, dass eine sehr große Anzahl, d. h. mehrere Tausend SAP-Partikel zur Wasseraufnahme bereitstehen, was eine große Messsicherheit ermöglicht.

Statt SAP-Partikel in nur einer einzigen Größe einzusetzen, kann auch der Einsatz einer Mischung von Partikeln unterschiedlicher Größe, z. B. zwei oder auch mehr Größen, sinnvoll sein.

Es versteht sich, dass die einer aus einem Vorrat besagter Flüssigkeiten gezogenen Probe zuzugebende Menge an SAP-Parti-keln jeweils so groß sein muss, dass die Menge an SAP-Parti-kel in der Lage ist, zumindest das in der Probe vorhandene freie Wasser auch so aufzunehmen, dass die Partikel eine signifikante und damit eindeutig messbare Vergrößerung durch Aufquellen erfahren. Ist jedoch die SAP-Partikelmenge diesbezüglich zu klein, tritt eine vollständige Sättigung der zu wenigen Partikel ein, und es wird somit ein unzutreffender, d. h. zu kleiner Wassergehalt bestimmt, da noch zumindest freies Wasser in der Probe vorhanden sein kann.

Ist aber eine im Hinblick auf den gegebenen Wassergehalt der Probe zu große Menge an SAP-Partikeln in die Probe gegeben worden, dann kann u. U. die Ermittlung der dann dementsprechend geringen Partikelgrößenzunahme erschwert messbar sein.

Es gilt also, ein optimales Verhältnis zwischen Probenmenge und SAP-Partikelmenge bevorzugter Größenordnung im Wassergehalts-Messbereich des jeweiligen Messgeräts von 0 bis hin zu 1000 ppm einzuhalten.

Es ist auch denkbar, die Größenzunahmemessung auch inline, d. h. im Kreislauf vorzunehmen, wie auch die SAP-Partikel, z. B. durch Injektion in die Probenzuführungsleitung, zum jeweiligen Messgerät in die Probenflüssigkeit zudosiert werden können.

Derjenige, der das erfindungsgemäße Verfahren durchführt, muss also die z. B. durch Empfehlung vorzugebende Menge der aus der zu untersuchenden Flüssigkeit zu ziehenden Probe und die dieser entsprechende Menge der hinzuzugebenden SAP-Parti-kel gemäß der jeweiligen Kalibrierung des Partikelzählgeräts beachten, um eine Sättigung der SAP-Partikel, die eine weitere, dem tatsächlichen Wassergehalt der Probe entsprechende Wasseraufnahme verhindert, möglichst nicht zu erreichen oder gar zu überschreiten.

Zur Vermeidung derartiger Fehlbestimmungen kann einerseits in Handreichungen für diese erfindungsgemäße Wassergehaltsbestimmung über die erfahrungsgemäßen Größenordnungen für tolerierbare Wassergehalte bestimmter Flüssigkeiten informiert werden, um jeweils angepasste Mengen an SAP-Partikeln in eine Probe zu geben. So ist für Dieselkraftstoff z. B. ein Wassergehalt von bis zu max. 200 ppm und für Kerosin deutlich kleiner als 200 ppm, ggf. aber sogar nur 15 bis 30 ppm zugelassen. In anderen Fällen kann dieser Wert u. U. sicherlich auch höher und vielleicht sogar auf z. B. bis zu einem Wassergehalt mit 1000 ppm ansteigen. Dann muss natürlich eine dementsprechend große SAP-Partikelmenge in die einen vermutlich derart hohen Wassergehalt aufweisende Probe gegeben werden.

Außer solchen Informationen kann auch in der Software der Auswerteeinheit des Partikelmessgeräts eine Kontrollroutine vor gesehen werden, die den zu einer Probe ermittelten Wassergehaltswert auf Plausibilität prüfen und ggf. ein Fehlersignal mit der Aufforderung zur Wiederholung der Probenuntersuchung anzeigen kann, und zwar mit einer größeren oder kleineren SAP-Partikel-Menge.

Das zuvor beschriebene Wassergehalts-Bestimmungsverfahren kann auch auf Flüssigkeiten angewandt werden, die, wie z. B. 100% reines Aceton, reiner Alkohol oder Äther usw., kein Wasser enthalten dürfen, was durch eine diesbezügliche Reinheitsprüfung mit SAP-Partikeln kontrollierbar ist.

Es soll nicht unerwähnt bleiben, dass zur erfindungsgemäßen Wassergehaltsbestimmung einer Probe an dieser auch Temperaturveränderungen vorgenommen werden können und, z. B. nach einer ersten Messung bei Raumtemperatur, eine zweite Messung bei demgegenüber erhöhter Temperatur erfolgt. Ebenso können auch Druckveränderungen, z. B. durch Druckbeaufschlagung der Probe in der kurzen Reaktionszeit, vorgenommen werden, um auf diese Weise ggf. auch noch in der Probenflüssigkeit enthaltenes gebundenes, d. h. gelöstes Wasser für die Aufnahme durch die SAP-Partikel freizusetzen, um so auch diese Wasserpartikel in die Wassergehaltsbestimmung durch dementsprechend weiteres Aufquellen der SAP-Partikel mit einzubeziehen. Es können also die in diese Bestimmung mit einfließenden Parameter, z. B. durch Ausfällen von gebundenem Wasser, verändert werden, um so zusätzlich die Qualität der Größenzunahmemessung zu verbessern.

Ggf. kann der ersten auch eine zweite Wassergehaltsbestimmung unter veränderten Bedingungen, d. h. nach Änderungen der Messparameter, nachfolgen.

Ggf. kann die SAP-Partikelgrößenmessung auch noch durch einen Proben-Wiegevorgang ergänzt werden.

Auch können am verwendeten Partikelmessgerät, z. B. mittels eines Wählschalters, für aufeinander folgende Größenmessungen unterschiedliche Kennlinien ausgewählt werden, dies u. U. auch bei anderen Mengenverhältnissen von Probenmenge und SAP-Par-tikelmenge.

Die Einsatzmöglichkeiten des erfindungsgemäßen, einfach handzuhabenden Wassergehalts-Bestimmungsverfahren dürften also unüberschaubar vielfältig sein.

## Patentansprüche

1. Verfahren zur Bestimmung des Wassergehalts von nicht wasserbasierten Flüssigkeiten, wobei:
- sofern keine Probe zur Wassergehaltsprüfung bereits vorliegt, eine Probe aus der zu untersuchenden Flüssigkeit entnommen wird,
**gekennzeichnet durch** die folgenden Verfahrensschritte:
- vorsorgliches Durchführen von Maßnahmen zur schnellen intensiven Durchmischung der Probenflüssigkeit mit dem darin enthaltenen freien Wasser,
- Zugeben einer an das Probenvolumen angepassten Menge von stark hygroskopischen, **durch** Wasseraufnahme aufquellend sich vergrößernden Festkörperpartikeln in die Probe,
- erneutes Durchführen von Maßnahmen zur schnellen intensiven Durchmischung der Probenflüssigkeit mit diesen Partikeln,
- Abwarten einer an die zum Einsatz gekommenen Festkörperpartikel angepassten Reaktionszeit zur Reaktion mit der Probenflüssigkeit und dann
- Durchleiten der Probe **durch** den Messkanal eines Messgeräts, in welchem zumindest die Größenwerte der einzelnen, in der Probe enthaltenen, **durch** Wasseraufnahme auf-gequollenen Festkörperpartikel ermittelt werden können, die anschließend in einer Messwerte-Auswerteeinheit so ausgewertet werden, dass das Auswerteergebnis zumindest als numerischer Wassergehaltswert anzeigt oder ausgedruckt werden kann.

2. Verfahren nach Anspruch 1, **dadurch gekennzeichnet, dass** beim Durchleiten der Probe durch den Messkanal des Messgeräts auch die Anzahl der in der Probe enthaltenen, durch Wasseraufnahme aufgequollenen Festkörperpartikel ermittelt werden kann.

3. Verfahren nach Anspruch 1 oder 2, **dadurch gekennzeichnet, dass** als Festkörperpartikel Superabsorbent Polymers (SAP) in grobkörniger Pulverform bzw. als feines Granulat mit einer Korn- bzw. Partikelgröße in einer Größenordnung von etwa 0,1 µm bis 1000 µm, vorzugsweise 1 µm bis 100 µm, beispielsweise aber einheitlich 50 µm +/- 10% zur Verwendung vorgesehen sind.

4. Verfahren nach einem der vorhergehenden Ansprüche, **dadurch gekennzeichnet, dass** die SAP-Partikel kugelförmig ausgebildet sind.

5. Verfahren nach einem der vorhergehenden Ansprüche, **dadurch gekennzeichnet, dass** die Probenentnahme manuell oder maschinell erfolgt.

6. Verfahren nach einem der vorhergehenden Ansprüche, **dadurch gekennzeichnet, dass** die Zugabe der SAP-Partikel in die Probe manuell oder maschinell erfolgt.

7. Verfahren nach einem der vorhergehenden Ansprüche, **dadurch gekennzeichnet, dass** die schnelle intensive Durchmischung der Probe mit den SAP-Partikeln manuell oder maschinell erfolgt.

8. Vorrichtung zur Durchführung des Verfahrens nach einem der vorhergehenden Ansprüche, umfassend ein Messgerät mit einem Messkanal zum Durchleiten einer Probe, in welchem zumindest die Größenwerte einzelner, in der Probe enthaltener, durch Wasseraufnahme aufgequollener Festkörperpartikel ermittelt werden können, und umfassend eine Messwerte-Auswerteeinheit zur Auswertung des Messergebnisses der ermittelten Größenwerte derart, dass das Auswerteergebnis als numerischer Wassergehaltswert anzeigt oder ausgedruckt wird, wobei die Vorrichtung in einer ersten Ausführung für einen stationären und in einer demgegenüber erforderlichen zweiten Ausführung für einen mobilen Einsatz bestimmt und angepasst ist.

9. Vorrichtung nach Anspruch 8, **dadurch gekennzeichnet, dass** das Messgerät mit einer Vorrichtung zur maschinellen Entnahme und Zuführung der Probe zum Messgerät ausgestattet ist.

10. Vorrichtung nach Anspruch 9, **dadurch gekennzeichnet, dass** das Messgerät zum mobilen Einsatz in einem Transportkoffer mit einer Ausgestaltung für die Zuführung einer aus einer Flüssigkeit entnommenen Probe untergebracht ist.

11. Vorrichtung nach Anspruch 10, **dadurch gekennzeichnet, dass** das Messgerät auch die Anzahl von in einer Flüssigkeitsprobe nach dem Aufquellen enthaltenen SAP-Partikel als Festkörperpartikel ermitteln kann.

12. Vorrichtung nach einem der Ansprüche 8 bis 11, **dadurch gekennzeichnet, dass** als Messgerät ein handelsübliches laserbasiertes optisches Partikelmessgerät vorgesehen ist.

## Claims

1. A method for determining the water content of non-water-based liquids, wherein:
- if no sample for water content testing is already on hand, a sample is taken from the liquid to be examined,
**characterized by** the following method steps:
- as a precaution, performing provisions for fast, intensive mixing of the sample liquid with the free water contained therein,
- adding a quantity, adapted to the sample volume, of highly hygroscopic solid particles that are increasing in size from swelling by water absorption into the sample,
- again performing provisions for fast, intensive mixing of the sample liquid with these particles,
- waiting out a reaction time, adapted to the solid particles used, for reaction with the sample liquid and then
- passing the sample through the measurement channel of a measuring system, in which device at least the size values of the individual solid particles contained in the sample and swollen from water absorption can be ascertained, which values are then evaluated in a measurement-value evaluation unit in such a way that the outcome of the evaluation can be displayed or printed out at least as a numerical water content value.

2. The method of claim 1, **characterized in that** on passing the sample through the measurement channel of the measuring system, the number of solid particles swollen from water absorption contained in the sample can also be ascertained.

3. The method of claim 1 or 2, **characterized in that** superabsorbent polymers (SAP) in large-granular powdered form or as a fine granulate, with a grain or particle size on an order of magnitude of approximately 0.1 µm to 1000 µm, preferably 1 µm to 100 µm, but for example uniformly 50 µm ± 10%, are contemplated for use as solid particles.

4. The method of one of the foregoing claims, **characterized in that** the SAP particles are embodied in spherical form.

5. The method of one of the foregoing claims, **characterized in that** taking the sample is done manually or by machine.

6. The method of one of the foregoing claims, **characterized in that** the addition of the SAP particles into the sample is done manually or by machine.

7. The method of one of the foregoing claims, **characterized in that** the fast, intensive mixing of the sample with the SAP particles is done manually or by machine.

8. Apparatus for performing the method of one of the foregoing claims, including a measuring device having a measurement channel for passing a sample through, in which sample at least the size values of individual solid particles contained in the sample and swollen from water absorption can be ascertained, and including a measurement-value evaluation unit for evaluating the outcome of measurement of the size values ascertained, in such way that the outcome of evaluation is displayed or printed out as a numerical water content value, wherein the apparatus is intended and adapted in a first version for a stationary use and by comparison in a requisite second version for mobile use.

9. The apparatus of claim 8, **characterized in that** the measuring device is equipped with a contrivance for taking the sample and delivering it to the measuring system by machine.

10. The apparatus of claim 9, **characterized in that** the measuring device for mobile use is accommodated in a carrying case embodied for delivering a sample taken from a liquid.

11. The apparatus of claim 10, **characterized in that** the measuring device can also ascertain the number of SAP particles, in the form of solid particles, that are contained in a liquid sample after the swelling has occurred.

12. The apparatus of one of claims 8 through 11, **characterized in that** a commercially available laser-based optical particle measuring system is contemplated as the measuring system.

## Revendications

1. Procédé de détermination de la teneur en eau de liquides qui ne sont pas à base d'eau, dans lequel:
- si aucun échantillon pour le test de la teneur en eau n'existe déjà, on prélève un échantillon sur le liquide à examiner,
**caractérisé par** les étapes de procédé suivantes consistant:
- à mettre en oeuvre à titre préventif des mesures pour le mélange rapide intensif du liquide d'échantillon avec l'eau libre contenue dans celui-ci,
- à ajouter à l'échantillon une quantité adaptée au volume d'échantillon, de particules de solide fortement hygroscopiques et s'agrandissant en se gonflant par absorption d'eau,
- à mettre en oeuvre une nouvelle fois des mesures pour le mélange rapide intensif du liquide d'échantillon avec ces particules,
- à attendre un temps de réaction adapté aux particules de solide utilisées, pour la réaction avec le liquide d'échantillon, et, puis,
- à faire passer l'échantillon à travers le canal de mesure d'un appareil de mesure dans lequel au moins les valeurs de taille des particules de solide individuelles qui sont contenues dans ledit échantillon et se sont gonflées par absorption d'eau peuvent être déterminées qui sont ensuite évaluées dans une unité d'évaluation de valeurs de mesure de telle manière que le résultat d'évaluation peut au moins être affiché en tant que valeur numérique de teneur en eau ou être imprimé.

2. Procédé selon la revendication 1, **caractérisé par le fait que**, lorsqu'on fait passer ledit échantillon à travers le canal de mesure de l'appareil de mesure, on peut déterminer aussi le nombre des particules de solide qui sont contenues dans ledit échantillon et se sont gonflées par absorption d'eau.

3. Procédé selon la revendication 1 ou 2, **caractérisé par le fait que** l'on prévoit en tant que particules de solide, pour l'utilisation, des polymères superabsorbants (SAP) sous forme de poudre à gros grains ou bien comme granulés fins ayant une taille de grain ou bien de particule de l'ordre d'environ 0,1 µm à 1000 µm, de préférence de 1 µm à 100 µm, mais, par exemple, de manière uniforme de 50 µm +/- 10 %.

4. Procédé selon l'une quelconque des revendications précédentes, **caractérisé par le fait que** les particules SAP sont réalisées de manière sphérique.

5. Procédé selon l'une quelconque des revendications précédentes, **caractérisé par le fait que** le prélèvement d'échantillon est réalisé manuellement ou par machine.

6. Procédé selon l'une quelconque des revendications précédentes, **caractérisé par le fait que** l'ajout des particules SAP à l'échantillon se fait manuellement ou par machine.

7. Procédé selon l'une quelconque des revendications précédentes, **caractérisé par le fait que** le mélange rapide intensif de l'échantillon avec les particules SAP est réalisé manuellement ou par machine.

8. Dispositif pour la mise en oeuvre du procédé selon l'une quelconque des revendications précédentes, comprenant un appareil de mesure ayant un canal de mesure pour y faire passer un échantillon, dans lequel au moins les valeurs de taille de particules de solide individuelles qui sont contenues dans ledit échantillon et se sont gonflées par absorption d'eau peuvent être déterminées, et comprenant une unité d'évaluation de valeurs de mesure destinée à évaluer le résultat de mesure des valeurs de taille déterminées de telle sorte que le résultat d'évaluation est affiché en tant que valeur numérique de teneur en eau ou imprimé, ledit dispositif étant déterminée et adapté, dans une première configuration, pour une utilisation stationnaire et, dans une deuxième configuration nécessaire par rapport à ceci, pour une utilisation mobile.

9. Dispositif selon la revendication 8, **caractérisé par le fait que** ledit appareil de mesure est équipé d'un dispositif destiné aux prélèvement et amenée par machine de l'échantillon à l'appareil de mesure.

10. Dispositif selon la revendication 9, **caractérisé par le fait que**, pour l'utilisation mobile, ledit appareil de mesure est logé dans un coffre de transport ayant une configuration pour l'amenée d'un échantillon prélevé sur un liquide.

11. Dispositif selon la revendication 10, **caractérisé par le fait que** l'appareil de mesure peut déterminer aussi le nombre de particules SAP en tant que particules de solide, qui sont contenues dans un échantillon de liquide après le gonflement.

12. Dispositif selon l'une quelconque des revendications 8 à 11, **caractérisé par le fait qu'**un appareil de mesure de particules optique à base de laser disponible dans le commerce est prévu en tant qu'appareil de mesure.
